# EUROPEAN PATENT SPECIFICATION

(11) **EP 1 953 435 B1**
(45) Date of publication and mention of the grant of the patent: **29.09.2010**
(21) Application number: 08100627.2
(22) Date of filing: 18.01.2008
(51) Int. Cl.: F16K 31/06, F16K 27/02

(54) **Valve**
Ventil
Vanne

(30) Priority: 31.01.2007 IT MI20070154
(43) Date of publication of application: 06.08.2008
(73) Proprietor: Parker-Hannifin S.p.A., 20094 Corsico (MI) (IT)
(72) Inventor: Mascarello, Osvaldo, 20010, Vanzago (Milano) (IT); Borsatti, Jean Charles, CH-1234 Vessy (CH)
(74) Representative: Pesce, Michele

(56) References cited:
- EP-A- 1 691 121
- DE-A1- 10 319 632
- DE-A1- 10 334 944
- GB-A- 1 401 184
- US-B1- 6 298 879

## Description

The present invention relates to a valve. In particular it relates to a solenoid valve to be used to intercept miscellaneous fluids intended in particular for food use, such as in coffee machines, or in steam sterilizers or general steam generators in the electromedical sector.

Valves used for intercepting the most varied fluids have long been available commercially. Such valves are much used particularly in the coffee machine sector, especially for machines of professional type. Electromagnetically operated valves are frequently used in this sector.

Professional coffee machines present a boiler connected to a dispensing unit via suitable fluid passages interceptable by said solenoid valves. The dispensing unit comprises in one surface a pair of holes of standardized diameter and distance between axes. The first hole communicates with the spray head of the coffee machine, while the second hole is fed with pressurized hot water from a suitable boiler.

A valve of conventional type is mounted on the surface of the dispensing unit. This valve comprises a valve body in which, in a surface thereof connected to the dispensing unit, two holes are provided having their diameter and distance between axes identical to those provided in the dispensing unit; one of the two is provided in a position axial to the valve, while the second is provided in a side position. At the connection surface the valve body supports a pair of gaskets positioned about the two holes provided in the valve body. The valve body supports an axially holed bush, usually of stainless steel.

In that side of the valve body opposite the connection surface there is provided an internally threaded dead-ended hole coaxial with the valve body. This hole communicates with the axial hole via the bush, and with the side hole. An externally threaded ring welded to a core guide tube is screwed into the thread.

The cup-shaped piece is closed at its top by an element welded to it. This element can be of different form depending on the type of valve to which it is welded. In particular it can differentiate a three-way valve from a two-way valve. A conventional valving element (or moving core) is movable in the core guide tube between a first and a second position against a spring. When in its first position the valving element abuts against the steel bush and closes its hole. When in its second position it frees the bush hole and connects it to the side hole of the valve body, to allow fluid passage. Consequently, when the valving element is in its first position the dispensing unit is not fed, whereas when the valving element is in its second position the pressurized hot water flows from the axial hole to the side hole, through the first hole of the dispensing unit towards the spray head.

A valve conceived in this manner presents considerable drawbacks.

A first of these is that it is constructionally complicated. In this respect, to construct it the valve body has to be cast and then mechanically machined. The mechanical machining operations to be carried out on this component are extremely complex as it has to be drilled in several points, it has to be milled, the seat for the bush has to be formed and threaded. This all starts from a workpiece usually of forged brass construction. The choice of brass lies in its simplicity of machining by chip removal and for its resistance to utilization temperatures. In addition a ring has to be made and welded to the cup-shaped piece.

A further drawback of the known art is that to make the brass compatible with food use (to avoid extraction of the zinc or lead contained in the alloy), it is covered with a nickel layer, usually by a chemical bath (Nipploy process or Nichel Chimico). This nickel plating gives rise to a series of problems. Firstly it represents a further operation to which the valve body has to be subjected. Even if this operation is carried out with care, it is always possible for nickel residues to remain, which contaminate the water passing through the valve body. Finally, if the nickel plating is not perfect and if chlorine is contained in the water (as is often the case in water originating from the domestic main), the chlorine attacks the nickel and penetrates below it, between the nickel layer and the brass, to gradually detach the entire coating. Hence although nickel plating eliminates the problem of water contamination by the lead or zinc contained in the brass, it creates the possible problem of water contamination by nickel.

DE-A-10334994 discloses a control valve in particular to be used for the regulation of a pressure valve. It comprises a magnetic core (12) longitudinally moving inside a coil (13) and supported by a helical spring (20). The valve is divided into an upper part (7) to be inserted into the lower area of a control circuitry cabinet exceeding the bottom panel with a circular extension and a lower part (6) joined to the upper part (7) by engaging a cylindrical upper extension with the circular extension and positioned below the bottom panel.

An object of the present invention is to eliminate the stated problems of the known art.

A particular object of the present invention is to provide a valve which is of simple construction and minimizes the mechanical processes required to obtain it.

A further object of the present invention is to provide a valve which does not present brass parts which can contaminate a fluid intercepted by the valve.

Another object of the present invention is to provide a valve which does not require any coating of parts which can potentially release metals recognized as damaging to human health, and hence not usable in the food field.

These and other objects are attained by a valve in accordance with the technical teachings of the accompanying claims.

Further characteristics and advantages of the invention will be apparent from the description of a preferred but non-exclusive embodiment of the valve of the invention, illustrated by way of non-limiting example in the accompanying drawings, in which:
Figure 1 is a sectional exploded perspective view of a three-way valve according to the present invention;
Figure 2 is a side sectional view of a valve of Figure 1 shown in its closed position;
Figure 3 is a side sectional view of a valve of Figure 1 shown in its open position;
Figure 4 is a perspective view of the valve of the present invention, shown complete and ready for use;
Figure 5 shows an enlarged constructional component of the valve of Figure 1; and

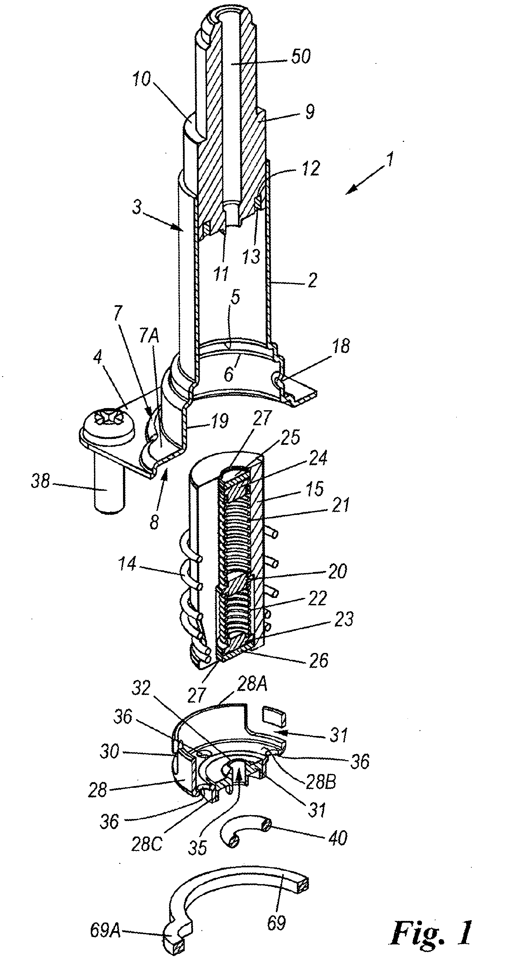

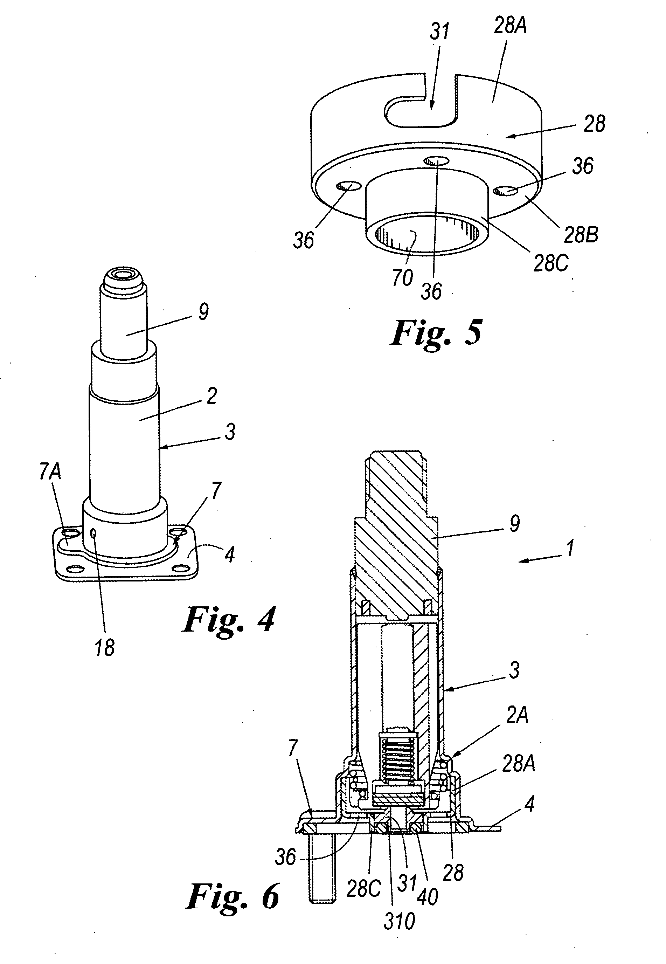

Figure 6 is a side sectional view of a different embodiment of the valve of Figure 1. With reference to said figures, these show a valve indicated overall by the reference numeral 1. The valve in question presents a cup-shaped element 3 presenting an outer surface 2 on which a driver element, such as an electromagnet, can be mounted. The cup-shaped element 3 is produced in one piece by deep pressing from a plate of food quality stainless steel. The cup-shaped element presents a first cylindrical portion 2A which at one end presents a connection flange 4 integral therewith. The cylindrical portion 2A presents a first step 5 and a second step 6. In the connection portion between the flange 4 and the cylindrical portion 2A of the cup-shaped piece 3 a re-entrant portion 7 is present, defining a housing 8 for a seal gasket 69 shaped perimetrally as said housing 8. The re-entrant portion is of substantially circular shape with a radial protuberance 7A.

The flange 4 is in the shape of a square preferably of standard dimensions, for example 16x16mm or 24x24mm. These dimensions enable the valve to be connected to conventional currently available dispensing units and/or to other devices comprising the same connectors and communication holes.

A stop with connector (or fixed core) 9 is welded to that end of the cup-shaped piece 3 distant from the flange 4, along a welding line 10. The fixed core 9 welded to the cup-shaped element 3 defines the type of valve, in particular it differing if the valve is a two-way or three-way valve. In the example shown in Figures 1, 2, 3, 4 the valve is a three-way valve. Consequently the fixed core 9 is axially holed and presents a projecting rim 11 which surrounds the axial hole 50 at an opening of said hole 50 which serves as a discharge or second way. In addition it presents about the hole 50 a groove 12 housing a metal ring 13 usually made of cooper and known as a phase displacement ring, to eliminate vibration if the coil is used with alternating current.

The cup-shaped element 3 also presents surface bosses on an inner cylindrical wall 19 located between the re-entrant portion 7 and the second step 6.

A core 15 is movable in the cup-shaped element 3 against the action of a spring 14. When the core is inserted into the cup-shaped element the spring rests on the step 5.

The core is internally holed and comprises, in a central position thereof, a stop element 20 which is fixed thereto. A spring 21, 22 rests on each side of the stop element 20; a presser element 23, 24 is positioned on the end of each spring. The lower presser element 23 (Figure 1) thrusts against a synthetic ruby disc 26, which acts as the seal element for the core. The movement of the ruby disc 26 is limited by suitable stops 27. The upper presser element is instead made of rubber.

The valve also comprises a closure element 28. The closure element is made by pressing from a stainless steel sheet and presents a first cylindrical wall 28A, connected by a connection portion 28B to a second cylindrical wall 28C, coaxial to the first but of smaller diameter.

The closure element 28 presents means for its fixing to the cup-shaped piece 3. These fixing means comprise three L-shaped slots 30 provided in the wall 28A, to cooperate with the bosses of the cup-shaped element, for bayonet coupling.

The second wall 28C of the closure element defines a seat 70 for housing a bush 31. The bush 31 presents a first axial passage 35, with a rim 32 about that opening of said axial passage 35 facing the interior of the cup-shaped element. At the opposite end, about that opening of the first passage facing the exterior of the cup-shaped element it presents a circular groove for housing an O-ring; the groove is of inverted U cross-section.

The bush is locked by interference with the wall 28C of the cup-shaped element.

Four holes 36 are provided in the connection portion 26B of the cup-shaped element to define second passages for fluid into the valve internal chamber.

The valve 1 of the present invention operates in the following manner.

The valve is initially mounted on a dispensing unit of a coffee machine or other devices provided with the same connector and communication holes. A second hole of the dispensing unit, connected to a pressurized hot water source, is aligned with the first passage 35, the O-ring 40 sealing the valve on said second hole. The first hole of the dispensing unit is positioned below the protuberance 7A provided in the recessed portion 7. The gasket 69 is aligned such that its protuberance 69A is superposed on the first hole of the dispensing unit.

At this point four screws 38 are tightened, screwed into suitable holes provided in the dispensing unit. A conventional electromagnet is mounted on the cup-shaped element 3 and fixed thereto in known manner.

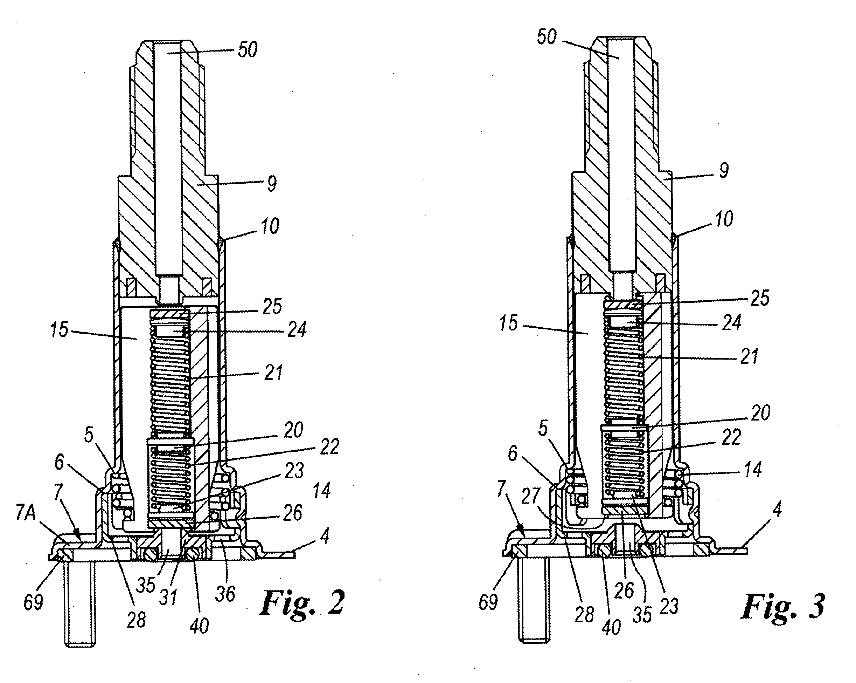

When the electromagnet is not energized (see Figure 2), the spring 14 (or other elastic element) urges the core towards the closure element; specifically the seal disc 26 is pressed by the spring 14 against the rim 32 provided about the first passage 35. The first passage 35 is hence closed, with the pressurized water present in the first passage remaining confined therein; the gasket 40 prevents seepage of pressurized water towards the first passage of the dispensing unit. The first hole of the dispensing unit communicates via the second passages 36 with the interior of the cup-shaped element 3. The hole provided in the fixed core 9 is open, this latter consequently being in communication with the interior of the cup-shaped piece 3.

When the electromagnet is energized it moves into the position shown in Figure 3, in which the seal 25 is brought into contact with the rim 11 surrounding the hole provided in the fixed core 9, to hence close the second passage 50 provided therein. At the same time the ruby disc 26 is raised from the rim 32, hence freeing the first passage 35. The hot water fed through this first passage 35 fills the interior of the cup-shaped piece 3 and, being unable to flow through the second passage 50 provided in the fixed core 9, passes through the second passages 36 and flows into the first passage provided in the dispensing unit, to hence reach the spray head. The gasket 69 prevents this fluid from dispersing over the surface of the dispensing unit. When the electromagnet is deactivated the core 15 returns to the position of Figure 2, urged by the spring 14 to close the first passage 35. The excess pressure remaining in the conduits of the dispensing unit is hence released through the hole 50 in the fixed core.

A valve conceived in this manner is extremely advantageous, both because of its constructional simplicity compared with traditional valves, and because of the absence of brass parts. In this respect the valve in question is easy to produce mainly by pressing, none of its components requiring chip removal machining operations as required to produce a traditional valve body. Consequently there is no economical or technical need to insert parts of brass therein which, as known, is used for its easy chip removal machinability.

Figure 6 shows an alternative embodiment of the aforedescribed valve. Valve parts identical to those of the preceding valve will not be further described, whereas the same reference numerals will be used to indicate parts functionally similar to those described. The valve shown in Figure 6 differs from that already described mainly by being a two-way valve. The fixed core has no hole, and the spring 21, presser 24 and rubber element 25 are absent from the valving element.

This valve also presents certain variants which can also be provided on the previously described three-way valve. These variants comprise the method for fixing the closure element 28 to the cup-shaped element 3. In this embodiment, fixing is by interference between the surface of the inner wall 19 of the cup-shaped element 3 and the first wall 28A of the closure element. Specifically, there are no L-shaped apertures in the wall 28A, and the inner wall of the cup-shaped part is without bosses.

In addition, the bush is of slightly different form than that previously described. It does not present a recess in the portion housing the O-ring 40 but simply an annular projection 310 about which the O-ring 40 is positioned. A portion of the second wall 28C of the closure element defines the seat for the said O-ring.

These different technical solutions can also be applied to a three-way valve such as that previously described.

The two embodiments illustrated are susceptible to numerous variants. For example, the closure element 28 can be formed in one piece with the bush 31. The means for fixing the closure element 28 to the cup-shaped piece can be replaced by a thread, cooperating with a corresponding thread provided in the inner surface of the cup-shaped piece 3.

These fixing means can also provide for the closure element 28 to be simply inserted into the cup-shaped element, the walls 28A and 19 not presenting interference but performing only the function of maintaining the bush 31 coaxial. In this case, fixing is by the screws which fix the valve to the fluid dispensing unit. In other words the closure element 28 is fixed between the step 6 and the surface of the fluid dispensing unit.

In a still different embodiment the flange 4 is of substantially circular shape with two radial protuberances in which the fixing holes are provided.

## Claims

1. A valve (1) comprising
- a cup-shaped element (3) presenting an outer surface on which a driver element is mountable and,
- completely inserted in said cup-shaped element (3), a core (15) comprising at least one seal element (26) arranged to block a first fluid passage (35) provided in a bush (31),
- said core being movable within said cup-shaped element (3) against the action of an elastic element (14) between a first position in which said seal element (26) rests on said bush (31) such as to close its first fluid passage (35) and a second position in which said seal element (26) is detached from said bush (31) such as to open its first fluid passage (35),
- said bush (31) being associated with a closure element (28) for the cup-shaped element (3),
- said closure element (28) presenting, for its fixing to the cup-shaped element (3), means (28A, 30) cooperating with an inner surface (19) of said cup-shaped element (3) and comprising at least one second fluid passage (36) through which said fluid can flow when said core (15) is in its second position,
**characterised in that**
- the cup-shaped element (3), at the side where the closure element (28) is fixed to it, is provided with a flange (4) for directly connecting the valve to a dispensing unit, and **in that**
- the bush (31) and the closure element (28) are completely housed within the cup shaped element (3).

2. A valve as claimed in claim 1, **characterised in that** said cup-shaped element (3) and said flange (4) are formed in one piece.

3. A valve as claimed in claim 1, **characterised in that** the fixing means comprise an outer cylindrical part (28A) of said closure element cooperating with said cup-shaped element.

4. A valve as claimed in claim 3, **characterised in that** said outer cylindrical wall of the closure element (28) is fixed into said cup-shaped element (3) by friction.

5. A valve as claimed in claims 1 and 3, **characterised in that** said fixing means comprise a bayonet coupling (18, 30).

6. A valve as claimed in claim 5, **characterised in that** in said cup-shaped element a boss (18) is provided cooperating with an L-shaped groove (30) provided in the wall of said closure element (28).

7. A valve as claimed in claim 1, **characterised in that** said fixing means comprise a thread.

8. A valve as claimed in claim 1, **characterised in that** said closure element comprises a housing seat (70) for said bush (31).

9. A valve as claimed in claim 8, **characterised in that** said bush (31) comprises a protuberance defining a first annular housing for an O-ring (40).

10. A valve as claimed in claim 9, **characterised in that** said first housing is perimetrally bounded by a further part of said bush.

11. A valve as claimed in claim 9, **characterised in that** said first housing is perimetrally bounded by a portion (28C) of said seat (70).

12. A valve as claimed in claim 1, **characterised in that** said flange presents a re-entrant portion (7) defining a second housing for a seal gasket (69), said re-entrant portion presenting a substantially circular configuration with a radial protuberance (69A), said protuberance being superposed on a dispensing hole for said fluid when the valve is mounted on said dispensing unit.

13. A valve as claimed in claim 1, **characterised in that** said flange (4) is of square shape, passage holes being provided at the corners of said square for screws (38) for fixing said valve to said dispensing unit.

14. A valve as claimed in claim 1, **characterised in that** said flange (4) is of substantially circular shape with two radial protuberances in which fixing holes are provided.

15. A valve as claimed in claim 1, **characterised in that** said cup-shaped element (3) comprises a first step (5)on which said elastic element (14) rests and a second step (6) on which side wall (28A) of the closure element rests.

16. A valve as claimed in claim 1, **characterised in that** said driver means is an electromagnet.

## Patentansprüche

1. Ventil (1) mit
- einem becherförmigen Element (3), das eine äußere Oberfläche bietet, auf der ein Antriebselement anbringbar ist, und
- einem vollständig in das becherförmige Element (3) eingesetzten Kern (15), der wenigstens ein Dichtungselement (26) aufweist, das dazu ausgestaltet ist, um einen ersten Fluiddurchgang (35) zu blockieren, der in einer Buchse (31) vorgesehen ist,
- wobei der Kern innerhalb des becherförmigen Elements (3) gegen die Wirkung eines elastischen Elements (14) zwischen einer ersten Position, in der das Dichtungselement (26) an der Buchse (31) anliegt, um so deren ersten Fluiddurchgang (35) zu schließen, und einer zweiten Position beweglich ist, in der das Dichtungselement (26) von der Buchse (31) gelöst ist, um so deren ersten Fluiddurchgang (35) zu öffnen,
- wobei die Buchse (31) einem Verschlusselement (28) für das becherförmige Element (3) zugeordnet ist,
- wobei das Verschlusselement (28) zu seiner Fixierung an dem becherförmigen Element (3) Einrichtungen (28a, 30) aufweist, die mit einer inneren Oberfläche (19) des becherförmigen Elements (3) zusammenwirken und wenigstens einen zweiten Fluiddurchgang (36) aufweisen, durch den das Fluid fließen kann, wenn der Kern (15) in seiner zweiten Position ist,
**dadurch gekennzeichnet, dass**
- das becherförmige Element (3) an der Seite, an der das Verschlusselement (28) daran befestigt ist, mit einem Flansch (4) versehen ist, um das Ventil direkt mit einer Ausgabeeinheit zu verbinden, und dass
- die Buchse (31) und das Verschlusselement (28) vollständig innerhalb des becherförmigen Elements (3) aufgenommen sind.

2. Ventil nach Anspruch 1, **dadurch gekennzeichnet, dass** das becherförmige Element (3) und der Flansch (4) in einem Stück gebildet sind.

3. Ventil nach Anspruch 1, **dadurch gekennzeichnet, dass** die Einrichtungen zum Fixieren einen äußeren zylindrischen Teil (28a) des Verschlusselements aufweisen, der mit dem becherförmigen Element zusammenwirkt.

4. Ventil nach Anspruch 3, **dadurch gekennzeichnet, dass** die äußere zylindrische Wand des Verschlusselements (28) durch Reibung in dem becherförmige Element (3) gehalten wird.

5. Ventil nach Anspruch 1 und 3, **dadurch gekennzeichnet, dass** die Einrichtungen zum Fixieren einen Bajonettverschluss (18, 30) aufweisen.

6. Ventil nach Anspruch 5, **dadurch gekennzeichnet, dass** das becherförmige Element mit einem Ansatz (18) versehen ist, der mit einer L-förmigen Nut (30) zusammenwirkt, die in der Wand des Verschlusselements (28) vorgesehen ist.

7. Ventil nach Anspruch 1, **dadurch gekennzeichnet, dass** die Einrichtungen zum Fixieren ein Gewinde aufweisen.

8. Ventil nach Anspruch 1, **dadurch gekennzeichnet, dass** das Verschlusselement eine Gehäuseaufnahme (70) für die Buchse (31) aufweist.

9. Ventil nach Anspruch 8, **dadurch gekennzeichnet, dass** die Buchse (31) einen Vorsprung aufweist, der eine erste ringförmige Aufnahme für einen O-Ring (40) definiert.

10. Ventil nach Anspruch 9, **dadurch gekennzeichnet, dass** die erste Aufnahme am Umfang durch einen Teil der Buchse begrenzt wird.

11. Ventil nach Anspruch 9, **dadurch gekennzeichnet, dass** die erste Aufnahme am Umfang durch einen Bereich (28c) der Gehäuseaufnahme (70) begrenzt wird.

12. Ventil nach Anspruch 1, **dadurch gekennzeichnet, dass** der Flansch einen hinterschnittenen Bereich (7) aufweist, der eine zweite Aufnahme für einen Dichtungsring (69) definiert, wobei der hinterschnittene Bereich eine im Wesentlichen kreisförmige Gestaltung mit einem radialen Vorsprung (69a) aufweist, wobei der Vorsprung über einer Ausgabeöffnung für das Fluid liegt, wenn das Ventil an der Ausgabeeinheit angebracht ist.

13. Ventil nach Anspruch 1, **dadurch gekennzeichnet, dass** der Flansch (4) quadratische Form hat, wobei an den Ecken des Quadrats Durchgangsöffnungen für Schrauben (38) vorgesehen sind, um das Ventil an der Ausgabeeinheit zu befestigen.

14. Ventil nach Anspruch 1, **dadurch gekennzeichnet, dass** der Flansch (4) im Wesentlichen kreisförmig ist, wobei zwei radiale Vorsprünge vorhanden sind, in denen Fixierungsöffnungen vorgesehen sind.

15. Ventil nach Anspruch 1, **dadurch gekennzeichnet, dass** das becherförmige Element (3) eine erste Schulter (5), auf der das elastische Element (14) ruht, und eine zweite Schulter (6) aufweist, auf der die Seitenwand (28a) des Verschlusselements ruht.

16. Ventil nach Anspruch 1, **dadurch gekennzeichnet, dass** das Antriebselement ein Elektromagnet ist.

## Revendications

1. Vanne (1) comprenant
- un élément en forme de godet (3) qui présente une surface extérieure sur laquelle un élément actionneur peut être monté, et,
- complètement inséré dans ledit élément en forme de godet (3), un noyau (15) comprenant au moins un élément d'étanchéité (26) disposé de manière à obturer un premier passage de fluide (35) ménagé dans une douille (31),
- ledit noyau pouvant se déplacer à l'intérieur dudit élément en forme de godet (3) contre l'action d'un élément élastique (14) entre une première position dans laquelle ledit élément d'étanchéité (26) est en appui sur ladite douille (31) de manière à fermer son premier passage de fluide (35) et une deuxième position dans laquelle ledit élément d'étanchéité (26) est détaché de ladite douille (31) de manière à ouvrir son premier passage de fluide (35),
- ladite douille (31) étant associée à un élément de fermeture (28) de l'élément en forme de godet (3),
- ledit élément de fermeture (28) présentant, pour sa fixation à l'élément en forme de godet (3), des moyens (28A, 30) qui coopèrent avec une surface intérieure (19) dudit élément en forme de godet (3) et comprenant au moins un deuxième passage de fluide (36) à travers lequel ledit fluide peut s'écouler lorsque ledit noyau (15) se trouve dans sa deuxième position,
**caractérisée en ce que**
- l'élément en forme de godet (3), sur le côté où l'élément de fermeture (28) y est fixé, comporte une bride (4) qui permet de raccorder directement la vanne à un module distributeur,
et **en ce que**
- la douille (31) et l'élément de fermeture (28) sont entièrement logés à l'intérieur de l'élément en forme de godet (3).

2. Vanne selon la revendication 1, **caractérisée en ce que** ledit élément en forme de godet (3) et ladite bride (4) sont formés d'une seule pièce.

3. Vanne selon la revendication 1, **caractérisée en ce que** les moyens de fixation comprennent une partie extérieure cylindrique (28A) dudit élément de fermeture qui coopère avec ledit élément en forme de godet.

4. Vanne selon la revendication 3, **caractérisée en ce que** ladite paroi extérieure cylindrique de l'élément de fermeture (28) est fixée par emmanchement dans ledit élément en forme de godet (3).

5. Vanne selon les revendications 1 et 3, **caractérisée en ce que** lesdits moyens de fixation comprennent un accouplement à baïonnette (18, 30).

6. Vanne selon la revendication 5, **caractérisée en ce qu'**il est prévu dans ledit élément en forme de godet un bossage (18) qui coopère avec une encoche en forme de L (30) ménagée dans la paroi dudit élément de fermeture (28).

7. Vanne selon la revendication 1, **caractérisée en ce que** lesdits moyens de fixation comprennent un filetage.

8. Vanne selon la revendication 1, **caractérisée en ce que** ledit élément de fermeture comprend un siège de logement (70) pour ladite douille (31).

9. Vanne selon la revendication 8, **caractérisée en ce que** ladite douille (31) comprend une saillie qui définit un premier logement annulaire pour un joint torique (40).

10. Vanne selon la revendication 9, **caractérisée en ce que** ledit premier logement est délimité périphériquement par une autre partie de ladite douille.

11. Vanne selon la revendication 9, **caractérisée en ce que** ledit premier logement est délimité périphériquement par une partie (28C) dudit siège (70).

12. Vanne selon la revendication 1, **caractérisée en ce que** ladite bride présente une partie rentrante (7) qui définit un deuxième logement pour un joint d'étanchéité (69), ladite partie rentrante ayant une configuration sensiblement circulaire avec une saillie radiale (69A), ladite saillie se trouvant au-dessus d'un orifice de distribution dudit fluide lorsque la vanne est montée sur ledit module distributeur.

13. Vanne selon la revendication 1, **caractérisée en ce que** ladite bride (4) est de forme carrée, avec des trous percés dans les angles dudit carré pour permettre le passage de vis (38) servant à fixer ladite vanne audit module distributeur.

14. Vanne selon la revendication 1, **caractérisée en ce que** ladite bride (4) est de forme sensiblement circulaire avec deux saillies radiales dans lesquelles des trous de fixation sont percés.

15. Vanne selon la revendication 1, **caractérisée en ce que** ledit élément en forme de godet (3) comprend un premier épaulement (5) sur lequel ledit élément élastique (14) est en appui et un deuxième épaulement (6) sur lequel la paroi latérale (28A) de l'élément de fermeture est en appui.

16. Vanne selon la revendication 1, **caractérisée en ce que** lesdits moyens d'actionnement sont un électro-aimant.
